# EUROPÄISCHE PATENTANMELDUNG

(11) **EP 3 945 340 A2**
(43) Veröffentlichungstag der Anmeldung: **02.02.2022**
(21) Anmeldenummer: 21185549.9
(22) Anmeldetag: 14.07.2021
(51) Int. Cl.: G01S 7/484, G01S 7/497, G01S 17/931, G01S 7/481

(54) **TEMPERATURSTEUERUNG IN EINEM AKTIVEN OPTISCHEN SENSORSYSTEM**

(30) Priorität: 27.07.2020 DE 102020119722
(71) Anmelder: Valeo Schalter und Sensoren GmbH, 74321 Bietigheim-Bissingen (DE)
(72) Erfinder: Parl, Christoph, 74321 Bietigheim-Bissingen (DE); BEUTH, Thorsten, 74321 Bietigheim-Bissingen (DE); KRAUSE, Jonas, 74321 Bietigheim-Bissingen (DE); LOGINENKO, Oleg, 74321 Bietigheim-Bissingen (DE)
(74) Vertreter: Kluth, Philipp

(57) **Zusammenfassung**

Ein aktives optisches Sensorsystem (1) weist eine Sendeeinheit (2) zum Aussenden von Licht (6) und eine Empfängereinheit (3) zum Detektieren von reflektierten Anteilen (7) des Lichts (6) auf. Eine Steuereinheit (4) ist dazu eingerichtet, die Sendeeinheit (2) zum Aussenden des Lichts (6) während einer Sequenz (14, 14') von Sendezeiträumen (16) anzusteuern, wobei jeweilige aufeinanderfolgende Sendezeiträume (16) der Sequenz (14, 14') durch entsprechende Pausenzeiträume (17) getrennt sind. Ein Temperatursensor (11) ist angeordnet und eingerichtet, eine charakteristische Temperatur des Sensorsystems (1) zu bestimmen. Die Steuereinheit (4) ist dazu eingerichtet, abhängig von der charakteristischen Temperatur eine Sendedauer wenigstens eines Sendezeitraums (16) und/oder eine Pausendauer wenigstens eines Pausenzeitraums (17) festzulegen.

## Beschreibung

Die vorliegende Erfindung betrifft ein aktives optisches Sensorsystem, aufweisend eine Sendeeinheit zum Aussenden von Licht in eine Umgebung des Sensorsystems, eine Empfängereinheit zum Detektieren von in der Umgebung des Sensorsystems reflektierten Anteilen des ausgesendeten Lichts, wobei die Empfängereinheit dazu eingerichtet ist, abhängig von den detektierten Anteilen wenigstens ein Empfängersignal zu erzeugen und eine Steuereinheit, die dazu eingerichtet ist, die Sendeeinheit zum Aussenden des Lichts während einer Sequenz von Sendezeiträumen anzusteuern, wobei jeweilige aufeinanderfolgende Sendezeiträume der Sequenz durch entsprechende Pausenzeiträume voneinander getrennt sind. Die Erfindung betrifft ferner ein Kraftfahrzeug mit einem solchen Sensorsystem, ein Verfahren zum Betreiben eines solchen Sensorsystems, ein Computerprogramm und ein computerlesbares Speichermedi um.

Bei aktiven optischen Sensorsystemen, beispielsweise Lidarsystemen und insbesondere Flash-Lidarsystemen, ist es wünschenswert, ein möglichst großes Sensorsichtfeld mit möglichst viel Licht auszuleuchten. Dazu werden optische Sendeeinheiten, die beispielsweise Laser beinhalten können, mit hohen optischen Ausgangsleistungen im Bereich mehrerer 10 W eingesetzt. Bei solchen Sendeeinheiten fällt jedoch aufgrund von Dissipation auch Wärmeleistung an, die in einer ähnlichen Größenordnung liegen kann und abgeführt werden muss. Dies kann das thermische Management des Sensorsystems erschweren, sodass gegebenenfalls auch unerwünschte Beschränkungen der optischen Ausgangsleistung in Kauf genommen werden müssen. Andererseits sinkt die optische Ausgangsleistung von Lichtquellen wie Lasern bei sehr geringen Umgebungstemperaturen.

Im Dokument US 10 481 268 B2 wird ein Lidarsystem zur Verwendung in einem Fahrzeug beschrieben, das eine Lichtquelle enthält, die von einem Prozessor derart gesteuert wird, dass der von ihr erzeugte Lichtfluss für unterschiedliche Teile des Sensorsichtfelds variiert werden kann. Wird nun identifiziert, dass eine Systemkomponente einen Temperaturschwellwert überschreitet, wird ein Beleuchtungsverhältnis zwischen unterschiedlichen Teilen des Sichtfelds angepasst. Dieser Ansatz hat jedoch unter anderem den Nachteil, dass keine gleichmäßige Ausleuchtung des gesamten Sensorsichtfelds sichergestellt wird.

Vor diesem Hintergrund ist es eine Aufgabe der vorliegenden Erfindung, ein verbessertes Konzept für ein aktives optisches Sensorsystem anzugeben, mit dem ein verbessertes thermisches Management des Sensorsystems erzielt werden kann, insbesondere durch das eine Wärmeentwicklung des Sensorsystems gezielt steuern kann, ohne die Leistungsfähigkeit des Sensorsystems signifikant zu beeinflussen.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen Ansprüche.

Das verbesserte Konzept geht aus von der Verwendung eines aktiven optischen Sensorsystems mit einer Sendeeinheit die derart angesteuert wird, dass das Licht während einer Sequenz von Sendezeiträumen derart ausgesendet werden kann, dass aufeinanderfolgende Sendezeiträume der Sequenz durch entsprechende Pausenzeiträume voneinander getrennt sind. Das verbesserte Konzept beruht nun auf der Idee, die Sendedauer der Sendezeiträume und/oder die Pausendauern der Pausenzeiträume abhängig von einer charakteristischen Temperatur des Sensorsystems anzupassen beziehungsweise festzulegen.

Gemäß dem verbesserten Konzept wird ein aktives optisches Sensorsystem angegeben, insbesondere ein aktives optisches Sensorsystem für ein Kraftfahrzeug. Das Sensorsystem weist eine Sendeeinheit zum Aussenden von Licht in eine Umgebung des Sensorsystems auf sowie eine Empfängereinheit zum Detektieren von in der Umgebung des Sensorsystems reflektierten Anteilen des ausgesendeten Lichts. Die Empfängereinheit ist dazu eingerichtet, abhängig von den detektierten Anteilen wenigstens ein Empfängersignal zu erzeugen. Das Sensorsystem weist eine Steuereinheit auf, die dazu eingerichtet ist, die Sendeeinheit zum Aussenden des Lichts während einer Sequenz von Sendezeiträumen anzusteuern, wobei jeweilige aufeinanderfolgende Sendezeiträume der Sequenz durch entsprechende Pausenzeiträume voneinander getrennt sind. Das Sensorsystem weist einen Temperatursensor auf, der eingerichtet und angeordnet ist, die charakteristische Temperatur des Sensorsystems zu bestimmen. Die Steuereinheit ist dazu eingerichtet, abhängig von der charakteristischen Temperatur eine Sendedauer wenigstens eines der Sendezeiträume der Sequenz und/oder eine Pausendauer wenigstens einer der Pausenzeiträume der Sequenz festzulegen.

Hier und im Folgenden kann der Begriff "Licht" derart verstanden werden, dass damit elektromagnetische Wellen im sichtbaren Bereich, im infraroten Bereich und/oder im ultravioletten Bereich umfasst sind. Dementsprechend kann auch der Begriff "optisch" derart verstanden werden, dass er sich auf Licht nach diesem Verständnis bezieht.

Bevorzugt handelt es sich in verschiedenen Ausführungsformen des Sensorsystems bei dem Licht um elektromagnetische Wellen im infraroten Bereich, insbesondere im nahinfraroten Bereich.

Die Sequenz beinhaltet insbesondere zwei oder mehre Sendezeiträume. Zwischen jedem Paar aufeinanderfolgender Sendezeiträume der Sequenz befindet sich insbesondere genau ein Pausenzeitraum.

Bei der charakteristischen Temperatur handelt es sich insbesondere um eine Temperatur innerhalb des Sensorsystems, beispielsweise innerhalb eines Gehäuses des Sensorsystems, oder in einer unmittelbaren Umgebung des Sensorsystems. Vorzugsweise handelt es sich bei der charakteristischen Temperatur um eine charakteristische Temperatur der Sendeeinheit, insbesondere einer Lichtquelle, etwa eines Lasers, der Sendeeinheit. Dementsprechend ist der Temperatursensor beispielsweise innerhalb des Sensorsystems, innerhalb des Gehäuses, oder außen an dem Gehäuse angeordnet. Vorzugsweise ist der Temperatursensor zum Bestimmten der charakteristischen Temperatur als charakteristische Temperatur der Sendeeinheit in einer unmittelbaren Umgebung der Sendeeinheit beziehungsweise der Lichtquelle angeordnet.

Beispielsweise kann die Sendeeinheit eine Temperatursenke beinhalten, die mit dem Laser oder einer sonstigen Lichtquelle der Sendeeinheit gekoppelt ist, auf der die Lichtquelle also beispielsweise montiert ist. Der Temperatursensor kann dann eine Temperatur der Temperatursenke bestimmen und/oder an dieser angeordnet sein.

Die Sendedauer verschiedener Sendezeiträume der Sequenz sind nicht notwendiger Weise gleich lang. Beispielsweise kann die Sequenz zwei oder mehr Teilsequenzen mit jeweils einem oder mehreren Sendezeiträumen enthalten, wobei die Sendedauer für alle Sendezeiträume jeder Teilsequenz gleich ist. Entsprechendes gilt auch für die Pausenzeiträume.

Während eines Sendezeitraums kann die Sendeeinheit beispielsweise das Licht kontinuierlich, amplitudenmoduliert oder gepulst, insbesondere mit einem vorgegebenen Tastgrad (englisch: "duty cycle"), aussenden. Während eines Pausenzeitraums wird jedoch von der Sendeeinheit kein Licht ausgesendet.

Durch die Festlegung der Sendedauer beziehungsweise der Pausendauer abhängig von der charakteristischen Temperatur wird eine effektive Temperaturregelung oder Temperatursteuerung für das Sensorsystem ermöglicht. Je länger die Sendedauer eines Sendezeitraums ist, desto mehr Wärme muss entsprechend abgeführt werden. Je länger die Pausendauer hingegen ist, desto mehr Zeit vergeht zwischen aufeinanderfolgenden Sendezeiträumen, sodass die charakteristische Temperatur stärker absinken kann, was im Mittel ebenfalls zu einer reduzierten Wärmeerzeugung Sensorsystems führt.

Durch das Festlegen der Sendedauer und/oder der Pausendauer kann auch eine Framedauer beziehungsweise eine Frame-Rate der Sequenz oder einer Teilsequenz der Sequenz festgelegt werden. Als Frame kann beispielsweise die Kombination eines Sendezeitraums mit einem darauffolgenden Pausenzeitraum oder eines Pausenzeitraums mit einem darauffolgenden Sendezeitraum verstanden werden. Wenn sowohl die Sendedauer als auch die Pausendauer angepasst werden, kann dementsprechend die Frame-Rate konstant belassen werden. Alternativ ist es auch möglich, die Frame-Rate zu verändern.

Neben der Begrenzung der Wärmeentwicklung kann anhand des verbesserten Konzepts jedoch auch vermieden werden, dass die charakteristische Temperatur, beispielsweise im Falle sehr geringer Umgebungstemperaturen, stärker sinkt als gewünscht. Durch eine entsprechende Verlängerung der Sendedauer beziehungsweise der Framerate oder eines Verhältnisses von Sendedauer zu Pausendauer, kann das Sensorsystem effektiv geheizt werden, sodass die optische Ausgangsleistung der Sendeeinheit ausreichend hoch bleibt.

Gemäß zumindest einer Ausführungsform ist das aktive optische Sensorsystem als Lidarsystem, insbesondere als Flash-Lidarsystem oder Blitz-Lidarsystem ausgebildet.

Das verbesserte Konzept ist insbesondere bei Lidarsystemen vorteilhaft, da diese durch die eingesetzten Lichtquellen typischerweise eine hohe Wärmeentwicklung aufweisen. Insbesondere bei Flash-Lidarsystemen, bei denen das gesamte Sichtfeld gleichzeitig ausgeleuchtet werden soll, ist es zum Erzielen der gewünschten Reichweite bei ausreichender Ausleuchtung in der Regel erforderlich, Lichtquellen mit einer hohen optischen Ausgangsleistung und einer damit einhergehenden hohen Wärmeentwicklung einzusetzen. Hier kann das verbesserte Konzept durch die Möglichkeit der effektiven Temperaturregelung besonders vorteilhaft wirken.

Die Empfängereinheit ist insbesondere dazu eingerichtet, während entsprechender Integrationszeiträume die reflektierten Anteile des ausgesendeten Lichts zu erfassen. Jeder Integrationszeitraum ist dabei einem, insbesondere genau einem, der Sendezeiträume zugeordnet und liegt beispielsweise innerhalb des zugeordneten Sendezeitraums. Beispielsweise kann eine Integrationsdauer des Integrationszeitraums gleich der Sendedauer des zugehörigen Sendezeitraums sein. Es ist jedoch auch möglich, dass die Integrationsdauer kürzer ist als die Sendedauer.

Die Definition des Integrationszeitraums kann beispielsweise mittels eine mechanischen oder elektronisch n Verschlussvorrichtung (Englisch: "Shutter") des Sensorsystems realisiert werden.

Gemäß zumindest einer Ausführungsform ist die Steuereinheit dazu eingerichtet, abhängig von der charakteristischen Temperatur die Sendedauer des Sendezeitraums und die Integrationsdauer des zugehörigen Integrationszeitraums festzulegen.

Durch die Festlegung beziehungsweise Anpassung der Integrationsdauer kann effektiv die durch das Sensorsystem erreichbare Informationsdichte eingestellt werden. Je länger der Integrationszeitraum, desto größer ist die Reichweite des Sensorsystems für den entsprechenden Frame, da umso mehr Zeit für Licht gegeben ist, um während des Integrationszeitraums von der Sendeeinheit zu einem Objekt in der Umgebung und zurück zur Empfängereinheit zu gelangen. Andererseits wird durch eine längere Integrationsdauer auch die Latenz des Systems erhöht, da erst nach Ende des Integrationszeitraums die erhaltenen Daten verarbeitet werden können.

Das verbesserte Konzept bietet also auch den Vorteil, dass zum einen lange Integrationsdauern für höhere Reichweiten festgelegt werden können, zum anderen auch kürzere Integrationsdauern, um eine schnellere Reaktion auf die Empfängersignale beziehungsweise eine geringere Latenz zu ermöglichen. Dies kann mit dem thermischen Management über die Festlegung der Sendezeiträume und/oder der Pausenzeiträume kombiniert werden. Beispielsweise sind durch das verbesserte Konzept innerhalb der Sequenz unterschiedliche Teilsequenzen möglich, die unterschiedliche Sendedauern der Sendezeiträume und entsprechend unterschiedliche Integrationsdauern der Integrationszeiträume im Wechsel realisieren. Dadurch können die beschriebenen Vorteile kurzer Sende- und Integrationsdauern mit den Vorteilen langer Integrationsdauern kombiniert werden.

Gemäß zumindest einer Ausführungsform ist die Steuereinheit dazu eingerichtet, abhängig von der charakteristischen Temperatur eine Intensität von während wenigstens eines der Sendezeiträume ausgesendeten Lichts anzupassen.

Auch die Intensität des ausgesendeten Lichts hat einen Einfluss auf die Hitzeentwicklung der Sendeeinheit, sodass auch durch Berücksichtigung der Intensität eine entsprechende verbesserte Temperaturregelung oder -steuerung ermöglicht wird. Ferner kann durch die entsprechende Festlegung der Intensität auch sichergestellt werden, dass eine Sättigung der Pixel der Empfängereinheit nicht oder in einem akzeptablen Umfang eintritt.

Gemäß zumindest einer Ausführungsform ist die Steuereinheit dazu eingerichtet, für jeden Sendezeitraum der Sequenz abhängig von der charakteristischen Temperatur eine Sendedauer des jeweiligen Sendezeitraums festzulegen und/oder für jeden Pausenzeitraum der Sequenz abhängig von der charakteristischen Temperatur eine Pausendauer des jeweiligen Pausenzeitraums festzulegen.

Gemäß zumindest einer Ausführungsform ist die Steuereinheit dazu eingerichtet, die Sendeeinheit zum Aussenden des Lichts während einer der Sequenz vorhergehenden, insbesondere unmittelbar vorhergehenden, Sequenz von Sendezeiträumen anzusteuern. Der Temperatursensor ist dazu eingerichtet, die charakteristische Temperatur während der vorhergehenden Sequenz zu bestimmen.

Dies hat den Vorteil, dass durch die vorherige Bestimmung der charakteristischen Temperatur die Sendedauern und/oder Pausendauern der Sequenz bereits vorab vollständig festgelegt werden können. Es kann also für die gesamte Sequenz eine passende Kombination aus kurzen und längeren Sende- beziehungsweise Integrationszeiträumen gewählt werden, um zum einen ein möglichst gutes thermisches Management zu erzielen, zum anderen aber auch die jeweils erforderlichen Informationen aus Nah- und Fernbereich zu erhalten.

Gemäß zumindest einer Ausführungsform ist die Steuereinheit dazu eingerichtet, abhängig von der charakteristischen Temperatur für eine erste Teilsequenz der Sequenz eine erste Sendedauer festzulegen und/oder eine erste Pausendauer festzulegen. Die Steuereinheit ist dazu eingerichtet, abhängig von der charakteristischen Temperatur für eine zweite Teilsequenz der Sequenz eine zweite Sendedauer festzulegen, die von der ersten Sendedauer verschieden ist und/oder eine zweite Pausendauer festzulegen, die von der ersten Pausendauer verschieden ist.

Jede der Teilsequenzen beinhaltet dabei insbesondere wenigstens einen Sendezeitraum. Die erste Sendedauer und/oder die erste Pausendauer gelten dann für alle Sendezeiträume beziehungsweise Pausenzeiträume der ersten Teilsequenz. Analog gelten die zweite Sendedauer und/oder die zweite Pausendauer für alle Sendezeiträume beziehungsweise Pausenzeiträume der zweiten Teilsequenz. Wie oben beschrieben kann dadurch zum einen ein abgestimmtes thermisches Management erfolgen, zum anderen können die erforderlichen Informationen aus Nah- und Fernbereich gesammelt werden.

Gemäß zumindest einer Ausführungsform ist die Steuereinheit dazu eingerichtet, die Sendedauern der Sendezeiträume der Sequenz derart zu bestimmen, dass eine mittlere Dauer aller Sendezeiträume der Sequenz umso kürzer ist, je größer die charakteristische Temperatur ist.

Dadurch kann die charakteristische Temperatur beispielsweise auf eine vorgegebene Maximaltemperatur begrenzt werden.

Gemäß zumindest einer Ausführungsform ist die Steuereinheit dazu eingerichtet, die Pausendauern der Pausenzeiträume der Sequenz derart zu bestimmen, dass eine mittlere Dauer aller Pausenzeiträume der Sequenz umso länger ist, je größer die charakteristische Temperatur ist.

Gemäß zumindest einer Ausführungsform weist das Sensorsystem, insbesondere die Empfängereinheit, ein mechanisches oder elektronisches Verschlusselement auf, das dazu eingerichtet ist, die Empfängereinheit wahlweise zu verschließen oder zu öffnen. Die Steuereinheit ist dazu eingerichtet, das Verschlusselement anzusteuern, sodass das Verschlusselement die Empfängereinheit für einen Integrationszeitraum während eines entsprechenden Sendezeitraums der Sequenz öffnet.

Das mechanische oder elektronische Verschlusselement kann auch als Shutter bezeichnet werden. Im Fall eines mechanischen Verschlusselements kann dieses zum Öffnen beziehungsweise Verschließen der Empfängereinheit so bewegt werden, dass eine aktive Fläche der Empfängereinheit für die reflektierten Anteile des ausgesendeten Lichts zugänglich beziehungsweise unzugänglich ist.

Im Fall eines elektronischen Verschlusselements können beispielsweise Halbleiterstrukturen auf einem Empfängerchip der Empfängereinheit vorgesehen sein, in die während des verschlossenen Zustands durch aufn die aktive Fläche einfallende Photonen erzeugte Ladungsträger umgeleitet werden, sodass diese nicht weiter zur verarbeitet oder zum Erzeugen des Empfängersignals herangezogen werden.

Der Integrationszeitraum liegt insbesondere innerhalb des entsprechenden Sendezeitraums. Beispielsweise kann jedem der Sendezeiträume ein entsprechender Integrationszeitraum zugeordnet sein. Dies ist aber nicht notwendiger Weise der Fall. Insbesondere kann die Empfängereinheit auch während eines Sendezeitraums verschlossen sein, beispielsweise, um das Sensorsystem bei niedrigen Umgebungstemperaturen zu heizen.

Gemäß zumindest einer Ausführungsform ist eine Integrationsdauer des Integrationszeitraums gleich der Sendedauer des entsprechenden Sendezeitraums.

Gemäß zumindest einer Ausführungsform ist die Steuereinheit dazu eingerichtet ist, das Verschlusselement anzusteuern, sodass das Verschlusselement die Empfängereinheit während eines Heizzeitraums, der einem der Sendezeiträume der Sequenz entspricht, zu verschließen.

Gemäß zumindest einer Ausführungsform ist die Steuereinheit dazu eingerichtet ist, eine Umgebungstemperatur des Sensorsystems zu bestimmen und die Sendedauer des jeweiligen Sendezeitraums und/oder die Pausendauer des jeweiligen Pausenzeitraums abhängig von der Umgebungstemperatur festzulegen.

Beispielsweise kann das Sensorsystem einen weiteren Temperatursensor zum Bestimmen der Umgebungstemperatur aufweisen oder die Steuereinheit weist eine Schnittstelle zur Verbindung der Steuereinheit mit einem externen Temperatursensor zum Bestimmen der Umgebungstemperatur auf.

Die Berücksichtigung der Umgebungstemperatur ist für das thermische Management vorteilhaft, da das verfügbare thermische Budget umso geringer ist, je größer die Umgebungstemperatur ist.

Gemäß zumindest einer Ausführungsform ist das Sensorsystem zur Montage an einem Kraftfahrzeug ausgestaltet. Die Steuereinheit ist dazu eingerichtet, eine Fahrgeschwindigkeit des Kraftfahrzeugs zu bestimmen und die Sendedauer des jeweiligen Sendezeitraums und/oder die Pausendauer des jeweiligen Pausenzeitraums abhängig von der Fahrgeschwindigkeit festzulegen.

Beispielsweise kann das Sensorsystem einen Geschwindigkeitssensor zum Bestimmen der Fahrgeschwindigkeit aufweisen oder die Sensorsystem weist zum Bestimmen der Fahrgeschwindigkeit eine Schnittstelle zum Verbinden der Steuereinheit mit einem Geschwindigkeitssensor des Kraftfahrzeugs beziehungsweise mit einem Bussystem des Kraftfahrzeugs auf.

Je höher die Fahrgeschwindigkeit des Kraftfahrzeugs ist, desto stärker fällt die Eigenkühlung des Sensorsystems ins Gewicht und desto höher ist entsprechend auch das verfügbare thermische Budget. Bereits deshalb ist es vorteilhaft, die Fahrgeschwindigkeit bei der Festlegung der Sendedauer beziehungsweise der Pausendauer zu berücksichtigen.

Ferner ist es jedoch für die Festlegung der Integrationsdauer relevant, wie schnell sich das Kraftfahrzeug bewegt. Bei geringen Geschwindigkeiten, beispielsweise bei Einparkvorgängen des Kraftfahrzeugs, kommt dem Nahbereich eine höhere Bedeutung zu als dem Fernbereich. Dementsprechend ist es dann gegebenenfalls vorteilhaft, kurze Integrationsdauern festzulegen. Bei hohen Fahrgeschwindigkeiten ist jedoch der Fernbereich von erhöhter Bedeutung, sodass es vorteilhaft sein kann, größere Integrationsdauern festzulegen. Durch das verbesserte Konzept kann das Temperaturmanagement also vorteilhafterweise an die Erfordernisse hinsichtlich der relevanten Informationen angepasst werden.

Gemäß zumindest einer Ausführungsform weist das Sensorsystem eine Recheneinheit auf, die dazu eingerichtet ist, abhängig von dem wenigstens einen Empfängersignal Bilddaten zu erzeugen und abhängig von den Bilddaten zu überprüfen, ob für eines oder mehrere Pixel der Empfängereinheit eine Sättigungsbedingung erfüllt ist. Die Steuereinheit ist dazu eingerichtet, die Sendedauer des jeweiligen Sendezeitraums und/oder die Pausendauer des jeweiligen Pausenzeitraums abhängig von einem Ergebnis der Überprüfung festzulegen.

Dadurch kann vermieden werden, dass eine Sättigung eintritt, beziehungsweise dass zu viele Pixel gesättigt sind. Durch die Wahl kürzerer Integrationsdauern kann auch entsprechend die Wahrscheinlichkeit für eine zu starke Sättigung reduziert werden.

Gemäß dem verbesserten Konzept wird auch ein Kraftfahrzeug mit einem aktiven optischen Sensorsystem gemäß dem verbesserten Konzept angegeben.

Gemäß dem verbesserten Konzept wird auch ein Verfahren zum Betreiben eines aktiven optischen Sensorsystems angegeben. Dabei wird Licht mittels des Sensorsystems, insbesondere mittels einer Sendeeinheit des Sensorsystems, während einer Sequenz von Sendezeiträumen in eine Umgebung des Sensorsystems ausgesendet, wobei jeweilige aufeinanderfolgende Sendezeiträume der Sequenz durch entsprechende Pausenzeiträume voneinander getrennt sind. In der Umgebung des Sensorsystems reflektierte Anteile des ausgesendeten Lichts werden mittels des Sensorsystems, insbesondere mittels einer Empfängereinheit des Sensorsystems, detektiert und abhängig von den detektierten Anteilen wird wenigstens ein Empfängersignal erzeugt, insbesondere mittels des Sensorsystems, insbesondere mittels der Empfängereinheit. Eine charakteristische Temperatur des Sensorsystems wird mittels des Sensorsystems, insbesondere mittels eines Temperatursensors des Sensorsystems, bestimmt, mittels des Sensorsystems, insbesondere mittels einer Steuereinheit des Sensorsystems, wird für jeden Sendezeitraum der Sequenz abhängig von der charakteristischen Temperatur eine Sendedauer des jeweiligen Sendezeitraums festgelegt und/oder für jeden Pausenzeitraum der Sequenz abhängig von der charakteristischen Temperatur eine Pausendauer des jeweiligen Pausenzeitraums festgelegt.

Weitere Ausführungsformen des Verfahrens nach dem verbesserten Konzept folgen direkt aus den verschiedenen Ausgestaltungsformen des Sensorsystems beziehungsweise des Kraftfahrzeugs nach dem verbesserten Konzept und jeweils umgekehrt. Insbesondere kann ein aktives optisches Sensorsystem nach dem verbesserten Konzept dazu eingerichtet oder programmiert sein, ein Verfahren nach dem verbesserten Konzept durchzuführen oder es führt ein solches Verfahren durch.

Gemäß dem verbesserten Konzept wird auch ein Computerprogramm mit Befehlen angegeben. Wenn die Befehle durch ein aktives optisches Sensorsystem nach dem verbesserten Konzept ausgeführt werden, veranlassen die Befehle das aktive optische Sensorsystem dazu, ein Verfahren nach dem verbesserten Konzept durchzuführen

Gemäß dem verbesserten Konzept wird auch ein computerlesbares Speichermedium angegeben, das ein Computerprogramm nach dem verbesserten Konzept speichert.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen können nicht nur in der jeweils angegebenen Kombination, sondern auch in anderen Kombinationen von dem verbesserten Konzept umfasst sein. Es sind somit auch solche Ausführungen des verbesserten Konzepts umfasst und offenbart, die in den Figuren nicht explizit gezeigt und/oder erläutert sind, jedoch durch separierte Merkmalskombinationen aus den erläuterten Ausführungen hervorgehen und erzeugbar sind. Es sind somit insbesondere auch Ausführungen und Merkmalskombinationen umfasst und offenbart, die nicht alle Merkmale eines ursprünglich formulierten Anspruchs aufweisen. Es sind darüber hinaus Ausführungen und Merkmalskombinationen umfasst und offenbart, die über die in den Rückbezügen der Ansprüche dargelegten Merkmalskombinationen hinausgehen oder von denen abweichen.

In den Figuren zeigen:
- Fig. 1: eine schematische Darstellung eines Kraftfahrzeugs mit einer beispielhaften Ausführungsform eines aktiven optischen Sensorsystems nach dem verbesserten Konzept;
- Fig. 2: eine schematische Darstellung einer weiteren beispielhaften Ausführungsform eines aktiven optischen Sensorsystems nach dem verbesserten Konzept; und
- Fig. 3: eine schematische Darstellung von beispielhaften Sequenzen von Sendezeiträumen.

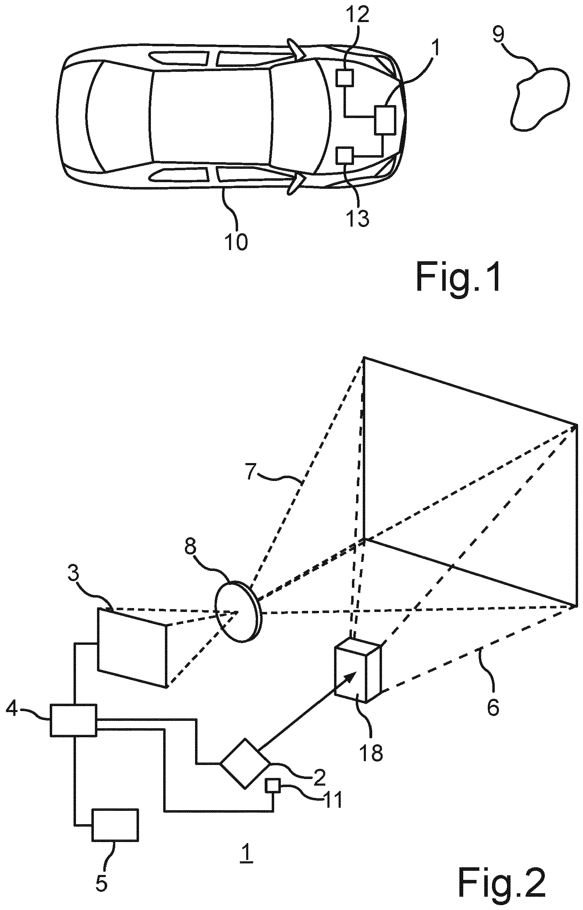

In Fig. 1 ist ein Kraftfahrzeug 10 schematisch dargestellt, das ein aktives optisches Sensorsystem 1 nach dem verbesserten Konzept aufweist. Das Sensorsystem 1 ist insbesondere als Flash-Lidarsystem ausgebildet.

Das Kraftfahrzeug 10 oder das Sensorsystem 1 können optional einen Umgebungstemperatursensor 12 und/oder einen Geschwindigkeitssensor 13 zum Bestimmen einer Geschwindigkeit eines Kraftfahrzeugs 10 aufweisen. Außerdem ist in Fig. 1 ein Objekt 9 in einer Umgebung des Kraftfahrzeugs 10 dargestellt.

In Fig. 2 ist schematisch eine Ausführungsform eines aktiven optischen Sensorsystems 1, das als Flash-Lidarsystem ausgestaltet ist, gezeigt. Das Sensorsystem 1 der Fig. 2 kann beispielsweise als Sensorsystem 1 des Kraftfahrzeugs 10 der Fig. 1 eingesetzt werden.

Das Sensorsystem 1 enthält eine Sendeeinheit 2, insbesondere mit einem oder mehreren Lasern, insbesondere Infrarotlaserdioden. Das Sensorsystem 1 weist außerdem eine Empfängereinheit 3 auf, die beispielsweise ein Array von optischen Detektoren, beispielsweise Fotodioden, zum Detektieren von Licht, insbesondere infrarotem Licht, enthält.

Das Sensorsystem 1 weist außerdem eine Steuereinheit 4 auf, die mit der Sendeeinheit 2 und mit der Empfängereinheit 3 gekoppelt ist, um die Sendeeinheit zum Aussenden von Licht 6 anzusteuern und Empfängersignale von der Empfängereinheit 3 zu erhalten, welche die Empfängereinheit 3 basierend auf detektiertem Licht 7 erzeugen kann.

Zudem weist das Sensorsystem 1 einen Temperatursensor 11 auf, der in der unmittelbaren Umgebung der Sendeeinheit 2, beispielsweise an einem Gehäuse der Sendeeinheit 2 oder eines Lasers der Sendeeinheit 2, angeordnet ist, um eine charakteristische Temperatur des Sensorsystems 1, insbesondere der Sendeeinheit 2 beziehungsweise des entsprechenden Lasers, zu bestimmen der Steuereinheit 4 und einen Messwert für die bestimmte charakteristische Temperatur zur Verfügung zu stellen.

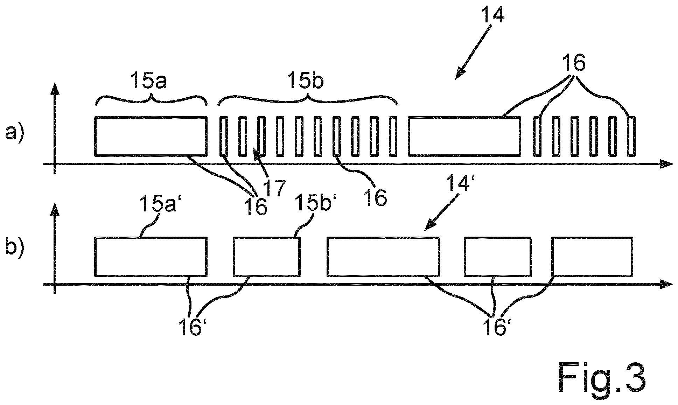

Die Steuereinheit 4 kann die Sendeeinheit 2 insbesondere derart ansteuern, dass diese das Licht 6 in eine Umgebung des Sensorsystems 1, insbesondere des Kraftfahrzeugs 10, aussendet, sodass während eines Sequenz 14, 14' (siehe Fig. 3) von Sendezeiträumen 16, 16' aussendet. Jeweilige aufeinanderfolgende Sendezeiträume 16, 16' sind dabei durch entsprechende Pausenzeiträume 17 voneinander getrennt (siehe Fig. 3). In der Umgebung des Sensorsystems 1 oder des Kraftfahrzeugs 10 kann das Licht 6 teilweise reflektiert werden, beispielsweise von dem Objekt 9, und wenigstens zum Teil in Richtung der Empfängereinheit 3 gelenkt werden. Das reflektierte Licht 7 kann dann von den optischen Detektoren der Empfängereinheit 3 detektiert werden, und diese kann basierend darauf wenigstens ein Empfängersignal erzeugen.

Beispielsweise kann das Sensorsystem 1 auch eine Linseneinheit 8 aufweisen, um das reflektierte Licht 7 auf die aktive Oberfläche der Empfängereinheit 3 zu lenken. Das Sensorsystem 1 kann, insbesondere wenn es als Flash-Lidarsystem ausgestaltet ist, auch eine Strahlaufweitungseinheit 18 aufweisen, um mittels der Sendeeinheit ausgesendete Laserstrahlen oder Laserpulse aufzuweiten, um ein Sichtfeld auszuleuchten.

Gemäß dem verbesserten Konzept ist die Steuereinheit 4 nun dazu eingerichtet, eine Sendedauer der Sendezeiträume 16, 16' und/oder eine Pausendauer der Pausenzeiträume 17 abhängig von der charakteristischen Temperatur festzulegen.

Optional kann das Sensorsystem 1 auch eine Recheneinheit 5 aufweisen, die basierend auf den Empfängersignalen Bilddaten erzeugen kann, welche die Umgebung des Sensorsystems 1 beziehungsweise des Kraftfahrzeugs 10 darstellen. Diese Bilddaten können von der Recheneinheit 5, einem elektronischen Fahrzeugführungssystem oder einem Fahrerassistenzsystem (nicht gezeigt) des Kraftfahrzeugs 10 zur Umsetzung von Fahrerassistenzfunktionen oder für Funktionen zum teilweise oder vollständig automatisierten Fahren des Kraftfahrzeugs 10 verwendet werden.

Fig. 3 zeigt schematisch in zwei Abbildungen a), b) die Intensität des ausgesendeten Lichts 6 als Funktion der Zeit für zwei beispielhafte Sequenzen 14, 14', wie sie von dem Sensorsystem 1 gemäß Fig. 1 oder Fig. 2 ausgesendet werden können.

Je nach Ausgestaltungsform des Sensorsystems 1 können die Sendezeiträume 16, 16' gleich jeweiligen Integrationszeiträumen der Empfängereinheit 3 sein, während derer die aktive Fläche der Empfängereinheit 3 durch ein elektronisches und/oder mechanisches Verschlusselement (nicht dargestellt) geöffnet ist. In verschiedenen Ausgestaltungsformen können die einzelnen Integrationszeiträume jedoch auch kürzer sein als die Sendezeiträume. Auch Kombinationen sind denkbar.

Je nach charakteristischer Temperatur kann die Steuereinheit 4 die Sendedauer der Sendezeiträume 16, 16' beziehungsweise die Pausendauern der Pausenzeiträume 17 anpassen, um eine zu starke Hitzeentwicklung durch die Sendeeinheit 2 beziehungsweise Aufheizung des Sensorsystems 1 zu vermeiden. Je Kürzer die Sendedauern beziehungsweise je geringer die Frame-Raten, desto geringer ist auch die Hitzeentwicklung.

Da jedoch durch Verkürzung der Sendedauern auch die Integrationsdauern verkürzt werden können, kann die Steuereinheit 4 innerhalb einer Sequenz 14, 14' auch unterschiedliche Sendedauern vorsehen, um so eine ausgewogene Bilanz von Hitzeentwicklung und Informationsdichte zu erzielen.

So kann die Sequenz 14 der Abbildung a) beispielsweise eine erste Teilsequenz 15a und eine zweite Teilsequenz 15b, die der ersten Teilsequenz 15a folgt, beinhalten. Im Beispiel der Fig. 3 besteht die erste Teilsequenz 15a aus einem Sendezeitraum 16 und die zweite Teilsequenz 15b besteht aus einer Vielzahl aufeinanderfolgender Sendezeiträume 16. Die Sendedauer des Sendezeitraums 16 der ersten Teilsequenz 15a ist dabei länger als die der Sendezeiträume 16 der zweiten Teilsequenz 15b. Durch die kurze Sendedauer der Sendezeiträume 16 der zweiten Teilsequenz 15b kann die Hitzeentwicklung begrenzt werden. Zudem kann durch die wiederholte Abtastung mit kurzen Integrationsdauern der Nahbereich des Kraftfahrzeugs 10 beziehungsweise des Sensorsystems 1 gut abgedeckt werden. Durch die lange Integrationsdauer der ersten Teilsequenz 15a wird dagegen sichergestellt, dass auch der Fernbereich abgedeckt ist. Durch die Abwechslung der beiden Teilsequenzen 15a, 15b kann eine ausgewogene Bilanz zwischen Hitzeentwicklung und Informationsdichte hergestellt werden.

Insbesondere kann eine Sequenz 14, wie sie in Abbildung a) der Fig. 3 dargestellt ist, bei relativ geringen Fahrzeuggeschwindigkeiten des Kraftfahrzeugs 10, beispielsweise bei Einparkvorgängen oder autonomen oder teilautonomen Manövern, vorteilhaft sein, wo der Nahbereich von erhöhter Wichtigkeit ist, da Ereignisse hier gegebenenfalls kurzfristige Reaktionen erfordern. Die aufeinanderfolgenden Frames mit kurzer Integrationsdauer der zweiten Teilsequenz 15b stellen dies sicher. Die längere Integrationsdauer der ersten Teilsequenz 15a ermöglicht es, zukünftige Reaktionen zu planen beziehungsweise vorzubereiten, indem der Fernbereich berücksichtigt wird.

In Abbildung b) ist eine Sequenz 14' gezeigt, die beispielsweise eine erste Teilsequenz 15a' und eine zweite Teilsequenz 15b' mit jeweils einem Sendezeitraum 16' und gegebenenfalls unterschiedlichen Sendedauern aufweist. Eine solche Sequenz kann beispielsweise bei höheren Geschwindigkeiten vorteilhaft sein, bei denen der Nahbereich von untergeordneter Bedeutung ist und der Fernbereich besonders wichtig ist.

In Ausführungsformen, in denen das Kraftfahrzeug 10 den Geschwindigkeitssensor 13 aufweist, kann die Steuereinheit 4 insbesondere abhängig von der Fahrzeuggeschwindigkeit des Kraftfahrzeugs 10 entsprechend eine passende Sequenz auswählen oder einstellen.

Zudem kann in Ausführungsformen, in denen das Kraftfahrzeug 10 oder das Sensorsystem 1 den Umgebungstemperatursensor 12 beinhaltet, auch die Umgebungstemperatur bei der Auswahl beziehungsweise Anpassung der Sequenzen, Sendezeiträume und/oder Pausenzeiträume berücksichtigt werden, um der Tatsache Rechnung zu tragen, dass bei hohen Umgebungstemperaturen das verfügbare thermische Budget von vornherein geringer ist als bei niedrigeren Umgebungstemperaturen.

Um Aufnahmen mit sehr großer Reichweite innerhalb des thermischen Budgets realisieren zu können, können auch Frames mit einer sehr langen Integrationszeit getrennt von Pausenzeiträumen in der Größenordnung von mehreren 10 s oder einer Minute eingesetzt werden.

Wie insbesondere bezüglich der Figuren beschrieben, ermöglicht das verbesserte Konzept eine effektive Temperaturregelung des aktiven optischen Sensorsystems. Dadurch kann eine Limitierung der Sendeleistung der Sendeeinheit durch intelligentes thermisches Management vermieden werden.

## Patentansprüche

1. Aktives optisches Sensorsystem (1) aufweisend
- eine Sendeeinheit (2) zum Aussenden von Licht (6) in eine Umgebung des Sensorsystems (1) und eine Empfängereinheit (3) zum Detektieren von in der Umgebung des Sensorsystems (1) reflektierten Anteilen (7) des ausgesendeten Lichts (6), wobei die Empfängereinheit (3) dazu eingerichtet ist, abhängig von den detektierten Anteilen (7) wenigstens ein Empfängersignal zu erzeugen; und
- eine Steuereinheit (4), die dazu eingerichtet ist, die Sendeeinheit (2) zum Aussenden des Lichts (6) während einer Sequenz (14, 14') von Sendezeiträumen (16) anzusteuern, wobei jeweilige aufeinanderfolgende Sendezeiträume (16) der Sequenz (14, 14') durch entsprechende Pausenzeiträume (17) voneinander getrennt sind,
**dadurch gekennzeichnet, dass**
- das Sensorsystem (1) einen Temperatursensor (11) aufweist, der eingerichtet und angeordnet ist, eine charakteristische Temperatur des Sensorsystems (1) zu bestimmen;
- die Steuereinheit (4) dazu eingerichtet ist, abhängig von der charakteristischen Temperatur eine Sendedauer wenigstens eines der Sendezeiträume (16) und/oder abhängig von der charakteristischen Temperatur eine Pausendauer wenigstens eines des Pausenzeiträume (17) festzulegen.

2. Aktives optisches Sensorsystem (1) nach Anspruch 1,
**dadurch gekennzeichnet, dass**
die Steuereinheit (4) dazu eingerichtet ist, für jeden Sendezeitraum (16) der Sequenz (14, 14') abhängig von der charakteristischen Temperatur eine Sendedauer des jeweiligen Sendezeitraums (16) festzulegen und/oder für jeden Pausenzeitraum (17) der Sequenz (14, 14') abhängig von der charakteristischen Temperatur eine Pausendauer des jeweiligen Pausenzeitraums (17) festzulegen.

3. Aktives optisches Sensorsystem (1) nach einem der vorhergehenden Ansprüche,
**dadurch gekennzeichnet, dass**
- die Steuereinheit (4) dazu eingerichtet ist, die Sendeeinheit (2) zum Aussenden des Lichts (6) während einer der Sequenz (14, 14') vorhergehenden Sequenz von Sendezeiträumen anzusteuern;
- der Temperatursensor (11) dazu eingerichtet ist, die charakteristische Temperatur während der vorhergehenden Sequenz zu bestimmen.

4. Aktives optisches Sensorsystem (1) nach einem der vorhergehenden Ansprüche,
**dadurch gekennzeichnet, dass**
- die Steuereinheit (4) dazu eingerichtet ist, abhängig von der charakteristischen Temperatur für eine erste Teilsequenz (15a, 15b) der Sequenz (14, 14') eine erste Sendedauer festzulegen und/oder eine erste Pausendauer festzulegen; und
- die Steuereinheit (4) dazu eingerichtet ist, abhängig von der charakteristischen Temperatur für eine zweite Teilsequenz (15a', 15b') der Sequenz (14, 14') eine zweite Sendedauer festzulegen, die von der ersten Sendedauer verschieden ist, und/oder eine zweite Pausendauer festzulegen, die von der ersten Pausendauer verschieden ist.

5. Aktives optisches Sensorsystem (1) nach einem der vorhergehenden Ansprüche,
**dadurch gekennzeichnet, dass**
- die Steuereinheit (4) dazu eingerichtet ist, die Sendedauern der Sendezeiträume (16) der Sequenz (14, 14') derart festzulegen, dass eine mittlere Dauer der Sendezeiträume (16) der Sequenz (14, 14') umso kürzer ist, je größer die charakteristische Temperatur ist; und/oder
- die Steuereinheit (4) dazu eingerichtet ist, die Pausendauern der Pausenzeiträume (17) der Sequenz (14, 14') derart festzulegen, dass eine mittlere Dauer der Pausenzeiträume (17) der Sequenz (14, 14') umso länger ist, je größer die charakteristische Temperatur ist.

6. Aktives optisches Sensorsystem (1) nach einem der vorhergehenden Ansprüche,
**dadurch gekennzeichnet, dass**
- das Sensorsystem (1) ein mechanisches oder elektronisches Verschlusselement aufweist, das dazu eingerichtet ist, die Empfängereinheit (3) wahlweise zu verschließen oder zu öffnen; und
- die Steuereinheit (4) dazu eingerichtet ist, das Verschlusselement anzusteuern, sodass dieses die Empfängereinheit (3) für einen Integrationszeitraum während eines entsprechenden Sendezeitraums (16) der Sequenz (14, 14') öffnet.

7. Aktives optisches Sensorsystem (1) nach Anspruch 6,
**dadurch gekennzeichnet, dass**
die Steuereinheit (4) dazu eingerichtet ist, das Verschlusselement anzusteuern, sodass dieses die Empfängereinheit (3) für einen während eines Heizzeitraums, der einem der Sendezeiträume (16) der Sequenz (14, 14') entspricht, zu verschließen.

8. Aktives optisches Sensorsystem (1) nach einem der Ansprüche 6 oder 7,
**dadurch gekennzeichnet, dass**
eine Integrationsdauer des Integrationszeitraums gleich der Sendedauer des entsprechenden Sendezeitraums (16) ist.

9. Aktives optisches Sensorsystem (1) nach einem der vorhergehenden Ansprüche,
**dadurch gekennzeichnet, dass**
die Steuereinheit (4) dazu eingerichtet ist, eine Umgebungstemperatur des Sensorsystems (1) zu bestimmen und die Sendedauer des jeweiligen Sendezeitraums (16) und/oder die Pausendauer des jeweiligen Pausenzeitraums (17) abhängig von der Umgebungstemperatur festzulegen.

10. Aktives optisches Sensorsystem (1) nach einem der vorhergehenden Ansprüche,
**dadurch gekennzeichnet, dass**
- das Sensorsystem (1) zur Montage an einem Kraftfahrzeug (10) ausgestaltet ist; und
- die Steuereinheit (4) dazu eingerichtet ist, eine Fahrtgeschwindigkeit des Kraftfahrzeugs (10) zu bestimmen und die Sendedauer des jeweiligen Sendezeitraums (16) und/oder die Pausendauer des jeweiligen Pausenzeitraums (17) abhängig von der Fahrtgeschwindigkeit festzulegen.

11. Aktives optisches Sensorsystem (1) nach einem der vorhergehenden Ansprüche,
**dadurch gekennzeichnet, dass**
- das Sensorsystem (1) eine Recheneinheit (5) aufweist, die dazu eingerichtet ist, abhängig von dem wenigstens einen Empfängersignal Bilddaten zu erzeugen und abhängig von den Bilddaten zu überprüfen, ob für eines oder mehrere Pixel der Empfängereinheit (3) eine Sättigungsbedingung erfüllt ist; und
- die Steuereinheit (4) dazu eingerichtet ist, die Sendedauer des jeweiligen Sendezeitraums (16) und/oder die Pausendauer des jeweiligen Pausenzeitraums (17) abhängig von einem Ergebnis der Überprüfung festzulegen.

12. Aktives optisches Sensorsystem (1) nach einem der vorhergehenden Ansprüche,
**dadurch gekennzeichnet, dass**
das Sensorsystem (1) als Lidarsystem ausgestaltet ist, insbesondere als Flash-Lidarsystem.

13. Kraftfahrzeug mit einem aktiven optischen Sensorsystem (1) nach einem der vorhergehenden Ansprüche.

14. Verfahren zum Betreiben eines aktiven optischen Sensorsystems (1), wobei
- Licht (6) mittels des Sensorsystems (1) während einer Sequenz (14, 14') von Sendezeiträumen (16) in eine Umgebung des Sensorsystems (1) ausgesendet wird, wobei jeweilige aufeinanderfolgende Sendezeiträume (16) der Sequenz (14, 14') durch entsprechende Pausenzeiträume (17) voneinander getrennt sind; und
- in der Umgebung des Sensorsystems (1) reflektierte Anteile (7) des ausgesendeten Lichts (6) mittels des Sensorsystems (1) detektiert werden und abhängig von den detektierten Anteilen (7) wenigstens ein Empfängersignal erzeugt wird;
**dadurch gekennzeichnet, dass**
- eine charakteristische Temperatur des Sensorsystems (1) bestimmt wird; und
- für jeden Sendezeitraum (16) der Sequenz (14, 14') abhängig von der charakteristischen Temperatur eine Sendedauer des jeweiligen Sendezeitraums (16) festgelegt wird und/oder für jeden Pausenzeitraum (17) der Sequenz (14, 14') abhängig von der charakteristischen Temperatur eine Pausendauer des jeweiligen Pausenzeitraums (17) festgelegt wird.

15. Computerprogrammprodukt mit Befehlen, die, wenn sie durch ein aktives optisches Sensorsystem (1) nach einem der Ansprüche 1 bis 12 ausgeführt werden, das aktive optische Sensorsystem (1) dazu veranlassen, ein Verfahren nach Anspruch 14 durchzuführen.
